(19) Europäisches Patentamt
European Patent Office
Office européen des brevets

(11) Veröffentlichungsnummer: **0 031 798**
**A2**

# (12) EUROPÄISCHE PATENTANMELDUNG

(21) Anmeldenummer: **80810408.7**

(22) Anmeldetag: **22.12.80**

(51) Int. Cl.³: **C 09 B 29/20**, C 09 B 43/32, C 08 K 5/23

(30) Priorität: **28.12.79 CH 11509/79**

(43) Veröffentlichungstag der Anmeldung: **08.07.81 Patentblatt 81/27**

(84) Benannte Vertragsstaaten: **CH DE FR GB IT LI**

(71) Anmelder: **CIBA-GEIGY AG, Patentabteilung Postfach, CH-4002 Basel (CH)**

(72) Erfinder: **Rouèche, Armand, Dr., Lerchenstrasse 38, CH-4103 Bottmingen (CH)**

(54) **Neue Monoazopigmente und Verfahren zu deren Herstellung.**

(57) Monoazopigmente der Formel

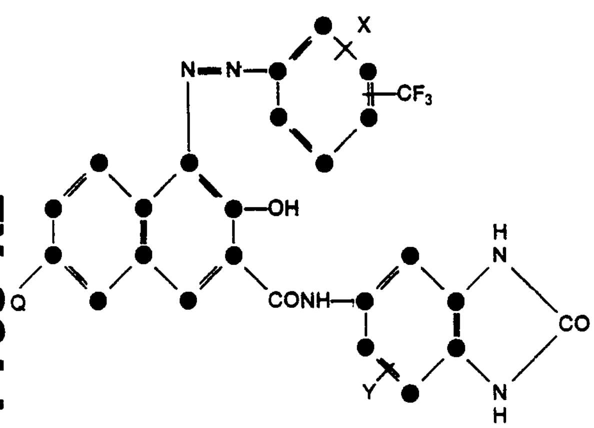

worin X ein Wasserstoff- oder Chloratom, eine Methoxy-, Äthoxy-, gegebenenfalls durch Chlor-, Methyl- oder Methoxygruppen substituierte Phenoxy-, Trifluormethyl-, Nitro-, Methylsulfonyl-, Äthylsulfonyl- oder Phenylsulfonylgruppe, Y ein Wasserstoff- oder Chloratom, eine Methyl-, Methoxy- oder Äthoxygruppe, Q ein Wasserstoff- oder Bromatom oder eine Methoxygruppe bedeuten. Sie färben plastische Massen in braunen Tönen von guter Hitze-, Licht-, Überlackier-, Migrations- und Wetterechtheit.

EP 0 031 798 A2

CIBA-GEIGY AG
Basel (Schweiz)

3-12669 +

# Neue Monoazopigmente und Verfahren zu deren Herstellung

Die vorliegende Erfindung betrifft wertvolle Monoazopigmente der Formel

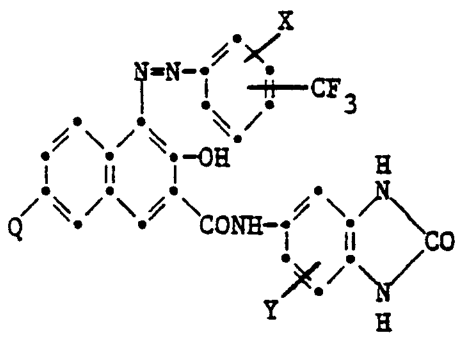

(I)

worin X ein Wasserstoff- oder Chloratom, eine Methoxy-, Aethoxy-, gegebenenfalls durch Chlor-, Methyl- oder Methoxygruppen substituierte Phenoxy-, Trifluormethyl-, Nitro-, Methylsulfonyl-, Aethylsulfonyl- oder Phenylsulfonylgruppe, Y ein Wasserstoff- oder Chloratom, eine Methyl-, Methoxy- oder Aethoxygruppe, Q ein Wasserstoff- oder Bromatom oder eine Methoxygruppe bedeuten.

Von besonderem Interesse sind Monoazopigmente der Formel

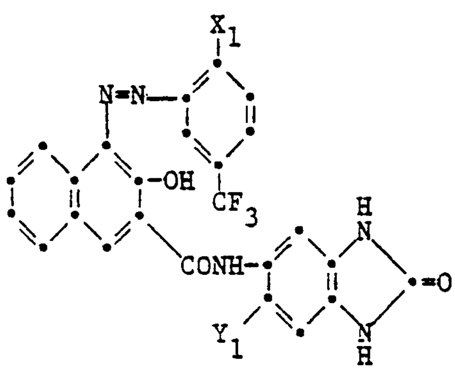

(II)

worin

$X_1$ ein Chloratom, eine Methoxy-, Aethoxy-, gegebenenfalls durch Chloratom, eine Methyl- oder Methoxygruppe substituierte Phenoxygruppe,

$Y_1$ ein Wasserstoff- oder Chloratom, eine Methyl- oder Methoxygruppe

bedeuten.

Ebenfalls bevorzugt sind Monoazopigmente der Formel

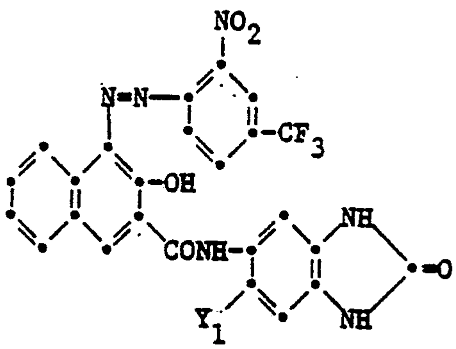

(III)

worin $Y_1$ die in der Formel II angegebene Bedeutung hat oder der Formel

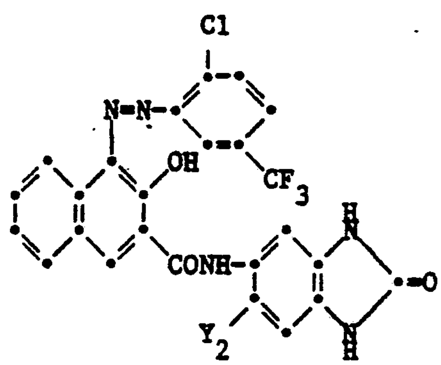

(IV)

worin $Y_2$ ein H-Atom oder eine Methylgruppe oder insbesondere ein Chloratom bedeutet.

Zu den neuen Pigmenten gelangt man, wenn man

a) ein Carbonsäurehalogenid der Formel

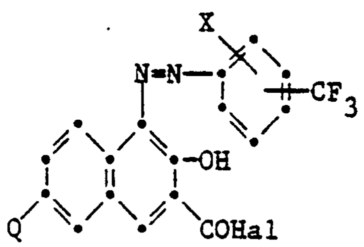

(V)

worin Hal ein Halogenatom bedeutet, mit einem Aminobenzimidazolonderivat der Formel

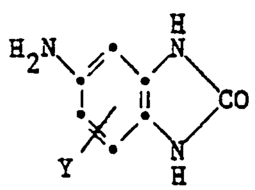

(VI)

im Molverhältnis 1:1 kondensiert, oder

b) die Diazoverbindung eines Amins der Formel

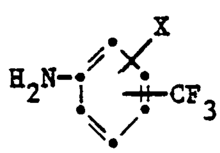

(VII)

mit einem Naphthol der Formel

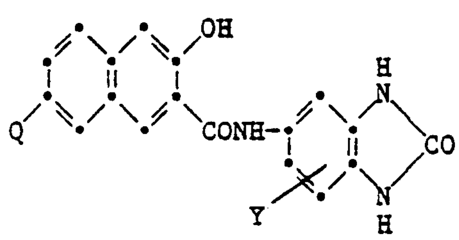

(VIII)

im Molverhältnis 1:1 kuppelt, wobei in den Formeln (V)-(VIII) X, Y und Q die angegebene Bedeutung haben.

Als Beispiele von Diazokomponenten der Formel (VII) seien genannt:
2-Aminobenzotrifluorid
3-Aminobenzotrifluorid
2-Amino-5-chlorbenzofrifluorid
3-Amino-4-chlorbenzotrifluorid
4-Amino-3-nitrobenzotrifluorid
5-Aminobenzo-1,3-bistrifluorid
3-Amino-4-methoxy-benzotrifluorid
3-Amino-4-aethoxybenzotrifluorid
3-Amino-4-phenoxybenzotrifluorid
3-Amino-4-parachlorphenoxybenzotrifluorid
3-Amino-4-paramethoxyphenoxybenzotrifluorid
3-Amino-4-paramethylphenoxybenzotrifluorid
3-Amino-4-aethylsulfon-benzotrifluorid
3-Amino-4-phenylsulfon-benzotrifluorid.

Die Kupplungskomponenten der allgemeinen Formel (VIII) können nach bekannten Verfahren, beispielsweise durch Umsetzung des 2-Hydroxy-3-naphthoesäurechlorids mit den Aminobenzimidazolonen der Formel (VI) hergestellt werden, beispielsweise
5-Amino-benzimidazolon
5-Amino-6-chlor-benzimidazolon
5-Amino-6-methyl-benzimidazolon
5-Amino-6-methoxy-benzimidazolon
5-Amino-7-chlor-benzimidazolon.

Die erwähnten Aminobenzimidazolone stellen bekannte Verbindungen dar.

Die Diazotierung erfolgt nach bekannten Methoden.

Die Kupplung findet vorzugsweise in schwach saurem Medium statt, zweckmässig in Gegenwart gebräuchlicher, die Kupplung fördernder Mittel. Als solche seien insbesondere Dispergiermittel genannt, beispielsweise Aralkylsulfonate, wie Dodecylbenzolsulfonat, oder 1,1'-Dinaphthylmethan-2,2'-disulfonsäure oder Polykondensationsprodukte von Alkylenoxyden. Die Dispersion der Kupplungskomponente kann auch vorteilhaft Schutzkolloide, beispielsweise Methylcellulose oder kleinere Mengen inerter, in Wasser schwer löslicher oder unlöslicher organischer Lösungsmittel enthalten, beispielsweise gegebenenfalls halogenierte oder nitrierte aromatische Kohlenwasserstoffe, wie Benzol, Toluol, Xylol, Chlorbenzol, Dichlorbenzol oder Nitrobenzol, sowie aliphatische Halogenkohlenwasserstoffe, wie z.B. Tetrachlorkohlenstoff oder Trichloräthylen, ferner mit Wasser mischbare organische Lösungsmittel, wie Aceton, Methyläthylketon, Methanol, Aethanol oder Isopropanol oder vorzugsweise Dimethylformamid.

Man kann die Kupplung auch vorteilhaft in der Weise durchführen, dass man eine saure Lösung des Diazoniumsalzes mit einer alkalischen Lösung der Kupplungskomponente in einer Mischdüse kontinuierlich vereinigt, wobei eine sofortige Kupplung der Komponenten erfolgt. Es ist darauf zu achten, dass Diazokomponente und Kupplungskomponente in äquimolekularen Mengen in der Mischdüse vorhanden sind, wobei es sich als vorteilhaft erweist, einen geringen Ueberschuss der Diazokomponente zu verwenden. Dies wird am einfachsten durch Kontrolle des pH-Wertes der Flüssigkeit in der Mischdüse bewirkt. Auch ist in der Mischdüse für eine starke Durchwirbelung der beiden Lösungen zu sorgen. Die entstandene Farbstoffdispersion wird der Mischdüse laufend entzogen und der Farbstoff durch Filtration abgetrennt.

Schliesslich kann die Kupplung auch so vollzogen werden, dass man das Amin mit der Kupplungskomponente im Molverhältnis 1:1 in einem organischen Lösungsmittel suspendiert und mit einem diazotierenden Mittel, insbesondere einem Ester der salpetrigen Säure, wie Methyl-, Aethyl-, Butyl-, Amyl- oder Oktylnitrit behandelt.

Die Azocarbonsäure, die dem Halogenid der Formel (V) zugrunde liegt, erhält man durch Kuppeln der Diazoverbindung eines Amins der Formel (VII) mit einer Hydroxynaphthoesäure der Formel

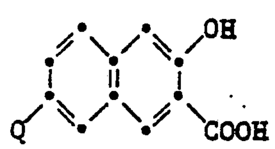

Die so erhaltenen Azofarbstoffcarbonsäuren werden mit Mitteln behandelt, die befähigt sind, Carbonsäuren in ihre Halogenide, z.B. die Chloride oder Bromide, überzuführen, so insbesondere mit Phosphorhalogeniden, wie Phosphorpentachlorid oder Phosphortrichlorid oder -pentabromid, Phosphoroxyhalogeniden und vorzugsweise mit Thionylchlorid.

Die Behandlung mit solchen säurehalogenierenden Mitteln wird zweckmässig in indifferenten organischen Lösungsmitteln, wie Dimethylformamid, Chlorbenzolen, z.B. Mono- oder Dichlorbenzol, Toluol, Xylol oder Nitrobenzol durchgeführt, bei den 5 letztgenannten gegebenenfalls unter Zusatz von Dimethylformamid.

Bei der Herstellung der Carbonsäurehalogenide ist es in der Regel zweckmässig, die in wässerigem Medium hergestellten Azoverbindungen vorerst zu trocknen oder durch Kochen in einem organischen Lösungsmittel azeotrop von Wasser zu befreien. Die azeotrope Trocknung kann gewünschtenfalls unmittelbar vor der Behandlung mit den säurehalogenierenden Mitteln vorgenommen werden.

Die Kondensation zwischen den Carbonsäurehalogeniden der eingangs genannten Art und den Aminen wird zweckmässig in wasserfreiem Medium

durchgeführt. Unter dieser Bedingung erfolgt sie im allgemeinen überraschend leicht schon bei Temperaturen, die im Siedebereich normaler organischer Lösungsmittel, wie Toluol, Monochlorbenzol, Dichlorbenzol, Trichlorbenzol, Nitrobenzol und ähnlichen liegen. Zur Beschleunigung der Umsetzung empfiehlt es sich im allgemeinen, ein säurebindendes Mittel, wie wasserfreies Natriumacetat oder Pyridin, zu verwenden. Die erhaltenen Farbstoffe sind z.T. kristallin und z.T. amorph und werden meistens in sehr guter Ausbeute und reinem Zustand erhalten. Es ist zweckmässig, die aus den Carbonsäuren erhaltenen Säurechloride vorerst abzuscheiden. In manchen Fällen kann aber ohne Schaden auf eine Abscheidung der Säurechloride verzichtet werden und die Kondensation unmittelbar anschliessend an die Herstellung der Carbonsäurechloride erfolgen.

Die erfindungsgemässen Pigmente können z.T. als Rohprodukte verwendet werden. Falls erwünscht, kann man jedoch die Rohprodukte durch Mahlen oder Kneten in eine feindisperse Form überführen. Dabei werden zweckmässig Mahlhilfsmittel, wie anorganische und/oder organische Salze in Gegenwart oder Abwesenheit organischer Lösungsmittel verwendet. Nach dem Mahlen werden Hilfsmittel wie üblich entfernt, lösliche anorganische Salze z.B. mit Wasser und wasserunlösliche organische Hilfsmittel beispielsweise durch Wasserdampfdestillation. Auch durch Behandeln der Rohpigmente mit organischen Lösungsmitteln, vorzugsweise solchen, die über 100°C sieden, kann, wenn erwünscht, oft eine Verbesserung der Eigenschaften erreicht werden. Als besonders geeignet erweisen sich, durch Halogenatome, Alkyl- oder Nitrogruppen substituierte Benzole, wie Xylole, Chlorbenzol, o-Dichlorbenzol oder Nitrobenzol sowie Pyridinbasen, wie Pyridin, Picolin oder Chinolin, ferner Ketone, wie Cyclohexanon, Aether, wie Aethylenglykolmonomethyl- oder monoäthyläther, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen durchführen.

Die Nachbehandlung erfolgt vorzugsweise durch Erhitzen des Pigmentes im Wasser oder Lösungsmittel auf 100 bis 200°C, wobei in gewissen Fällen eine Kornvergröberung und gegebenenfalls eine Kristallmodifikationsumwandlung eintritt, was sich günstig auf die Licht- und Migrationsechtheit der erhaltenen Pigmente auswirkt.

Die erfindungsgemäss erhaltenen Pigmente eignen sich zum Färben von hochmolekularem organischem Material natürlicher oder künstlicher Herkunft. Es kann sich z.B. um Naturharze, trocknende Oele oder Kautschuk handeln. Es kann sich aber auch um abgewandelte Naturstoffe handeln, beispielsweise um Chlorkautschuk, um ölmodifizierte Alkydharze oder um Viskose oder um Cellulosederivate wie Acetylcellulose und Nitrocellulose, und besonders um vollsynthetische organische Polyplaste, das heisst um Kunststoffe, die durch Polymerisation, Polykondensation und Polyaddition hergestellt sind. Aus der Klasse dieser Kunststoffe seien besonders folgende genannt: Polyäthylen, Polypropylen, Polyisobutylen, Polystyrol, Polyvinylchlorid, Polyvinylacetat, Polyacrylnitril, Polyacrylsäure- und Polymethacrylsäureester; Polyester, insbesondere hochmolekulare Ester aromatischer Polycarbonsäuren mit polyfunktionellen Alkoholen; Polyamide; die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste; die als Lackharze verwendeten Polyester, und zwar sowohl gesättigte, wie z.B. Alkydharze, als auch ungesättigte, wie beispielsweise Maleinatharze, und ferner die unter den Namen "Epoxydharze" bekannten Polyadditions- bzw. Polykondensationsprodukte von Epichlorhydrin mit Polyolen oder Polyphenolen; ferner die sogenannten Thermoplaste, d.h. die nicht härtbaren Polymeren. Es sei betont, dass nicht nur die einheitlichen Verbindungen, sondern auch Gemische von Thermoplasten, sowie Mischkondensate und Mischpolymerisate, wie z.B. solche auf Basis von Butadien, erfindungsgemäss pigmentiert werden können.

Die erfindungsgemässen Pigmente sind für das Färben von Polymeren, wie die als Lackrohstoffe bekannten, sogenannten Filmbildnern oder Bindemittel, besonders von Leinölfirnis, Nitrocellulose, Alkydharzen, Melaminharzen und Harnstoff-Formaldehydharzen besonders geeignet. Die Pigmentierung der hochmolekularen, organischen Substanzen mit den Pigmenten der Formel (I) erfolgt beispielsweise derart, dass man ein solches Pigment gegebenenfalls in Form von Masterbatches, diesen Substraten unter Verwendung von Walzwerken, Misch- oder Mahlapparaten zumischt. Das pigmentierte Material wird hierauf nach an sich bekannten Verfahren wie Kalandrieren, Pressen, Strangpressen, Streichen, Giessen oder durch Spritzguss in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können im erfindungsgemässen Verfahren vor oder nach der Einverleibung des Pigmentfarbstoffes in die Polymeren eingearbeitet werden. Es ist ferner möglich, zwecks Erzielung verschiedener Farbtöne den hochmolekularen, organischen Stoffen neben den Verbindungen der Formel (I) noch Füllstoffe bzw. andere farbgebende Bestandteile wie Weiss-, Bunt- oder Schwarzpigmente in beliebigen Mengen zuzufügen.

Zum Pigmentieren von Lacken und Druckfarben werden die hochmolekularen organischen Materialien und die Verbindungen der Formel (I) gegebenenfalls zusammen mit Zusatzstoffen wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die pigmentierten hochmolekularen organischen Materialien enthalten im allgemeinen Mengen von 0,001 bis 30 Gew.-% einer Verbindung der Formel (I), bezogen auf den zu pigmentierenden hochmolekularen organischen Stoff; dabei enthalten Polyplaste und Lacke vorzugsweise 0,1-5 Gew.-%, Druckfarben vorzugsweise 10-30 Gew.-%. Die zu wählende Menge an Pigment richtet sich in erster Linie nach der gewünschten Farbstärke, ferner nach der Schichtdicke des Formlings und schliesslich gegebenenfalls auch nach dem Gehalt an Weisspigment im Polyplast.

Die erfindungsgemässen Farbstoffe zeichnen sich durch leichte Zugänglichkeit, hohe Farbtonreinheit, eine gute Hitze-, Licht-, Ueberlackier-, Migrations- und Wetterechtheit aus.

Von den in den DE-AS 1.217.008 und 1.644.226 beschriebenen Monoazopigmenten unterscheiden sich die erfindungsgemässen durch andere Substituenten in der Diazo- bzw. Kupplungskomponente.

In den nachfolgenden Beispielen bedeuten die Teile, sofern nichts anderes angegeben wird, Gewichtsteile, die Prozente Gewichtsprozente und die Temperaturen sind in Celsiusgraden angegeben.

Beispiel 1: 3,0 Teile 3-Amino-4-chlor-benzotrifluorid werden in 25 Vol.-Teilen Eisessig bei Raumtemperatur gelöst, dann mit 3 Vol.-Teilen konz. Salzsäure versetzt. Die Lösung wird mit Eis auf 0° gekühlt, während 5 Minuten bei 0-5° mit 2,5 Vol.-Teilen 4-N-Natriumnitritlösung versetzt. Nach ca. 30 Minuten Nachrühren bei 0-5° korrigiert man mit Sulfaminsäure den Ueberschuss an Nitrit vollständig weg, anschliessend wird klarfiltriert.

3,2 Teile 5-(2'-Hydroxy-3'-naphthoylamino)-benzimidazolon werden in 3 Vol.-Teilen 30%-iger Natronlauge und 50 Vol-Teilen Wasser bei Raumtemperatur gelöst, mit 2 Teilen Hyflo versetzt und anschliessend klarfiltriert.

Innerhalb von 15 Minuten lässt man die Lösung der Kupplunskomponente in die Diazolösung zutropfen, wobei die Temperatur mittels Eiszugabe unter 5°C und der pH-Wert unter 5 gehalten wird. Man lässt noch 1 bis 2 Stunden bei 20-25° nachrühren, heizt dann auf 80°, filtriert das Pigment ab, wäscht mit heissem Wasser. Das Filtergut wird im Vakuum bei 70-80° getrocknet. Man erhält 5,2 Teile (98,9% d.Th.) eines rotbraunen Pulvers der Formel

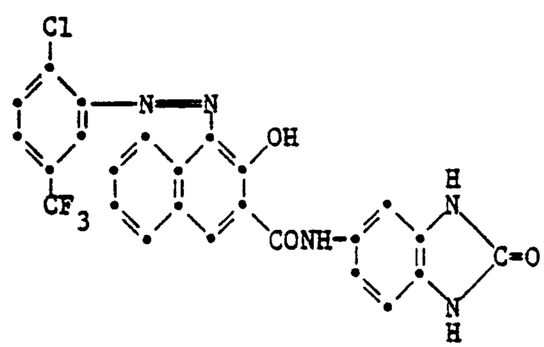

welches PVC in braunen Tönen färbt.

Durch Nachbehandlung in Dimethylformamid (60 Minuten bei 140°C) erfolgt eine Form- und Echtheitsverbesserung und man erhält ein Pigment, welches PVC in Braunton von sehr guter Migrations-, Licht- und Wetterechtheit färbt.

Beispiel 2: 81 Teile des Azofarbstoffes aus diazotiertem 4-Amino-3-nitrobenzotrifluorid und 2-Hydroxy-3-naphthoesäure werden in 480 Vol.-Teilen o-Dichlorbenzol und 0,7 Vol.-Teilen Pyridin bei 80°C suspendiert. Innert ca. 15 Minuten und bei 80°C werden 18 Vol.-Teile Thionylchlorid zugetropft. Man erwärmt auf 105°C und lässt 2 Stunden bei 105-110°C nachrühren. Das erhaltene Säurechlorid wird bei 15-20°C abgenutscht, mit Benzin und Petroläther nachgewaschen. Man trocknet im Vakuum bei 70-75°C und erhält 76 Teile des Azofarbstoffcarbonsäurechlorides.

46,2 Teile des so hergestellten Säurechlorids werden mit 700 Teilen o-Dichlorbenzol unter Rühren auf 80°C erwärmt. Nun gibt man im Verlauf von 2-3 Minuten eine 100°-warme Lösung enthaltend 19 Teile 5-Amino-6-methyl-benzimidazolon in 60 Teilen N-Methyl-2-pyrrolidon und 8,8 Vol.-Teilen Pyridin zu. Das ausgefallene Pigment wird 15 Stunden bei 140-145°C gerührt. Das Reaktionsgemisch wird heiss filtriert, mit heissem o-Dichlorbenzol, anschliessend mit kaltem Methanol und dann mit heissem Wasser nachgewaschen. Nach dem Trocknen im Vakuum bei 60 bis 70°C erhält man 52 Teile eines weichkörnigen braunen Pigmentpulvers, das Kunststoffe, wie beispielsweise Polyvinylchlorid, sowie Lacke in braunen Tönen von ausgezeichneter Migrations-, Ueberlackier- und Lichtechtheit färbt. Der Pigmentfarbstoff besitzt folgende Strukturformel

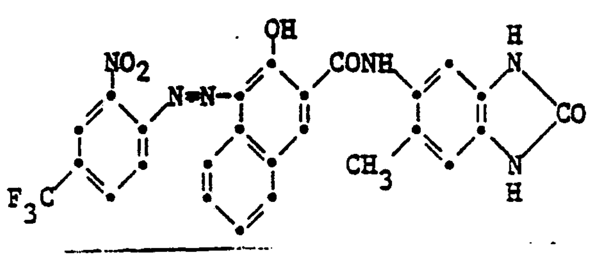

In nachstehender Tabelle sind weitere Azopigmente beschrieben, welche erhalten werden, wenn man nach obigen Angaben die Diazoverbindung des in Kolonne I genannten Amins mit der in Kolonne II erwähnten 2,3-Hydroxynaphthoesäure kuppelt und das Säurechlorid des erhaltenen Monoazofarbstoffs mit dem in Kolonne III aufgeführten Amin kondensiert. Kolonne IV bezeichnet den Farbton einer mit dem entsprechenden Pigment gefärbten Polyvinylchloridfolie.

| Bsp. | I | II | III | IV |
|---|---|---|---|---|
| 3 | 4-Amino-3-nitrobenzotrifluorid | 2,3-Hydroxynaphthoesäure | 5-Aminobenzimidazolon | braun |
| 4 | " | " | 5-Amino-6-chlorbenz-imidazolon | braun |
| 5 | 3-Amino-4-chlorbenzotrifluorid | " | " | rot |
| 6 | " | " | 5-Aminobenzimidazolon | braun |
| 7 | " | " | 5-Amino-6-methylbenz-imidazolon | braun |
| 8 | " | " | 5-Amino-6-methoxybenz-imidazolon | braun |
| 9 | " | " | 5-Aminobenzimidazolon | braun |
| 10 | 3-Amino-4-parachlorphenoxybenzotrifluorid | " | " | rot |
| 11 | 5-Aminobenzo-1,3-ditrifluorid | " | " | rot |
| 12 | 2-Aminobenzotrifluorid | " | " | braun |

| Bsp. | I | II | III | IV |
|---|---|---|---|---|
| 13 | 3-Amino-4-(p-methyl)-phenoxy-benzotrifluorid | 2,3-Hydroxynaphthoesäure | 5-Amino-6-methylbenz-imidazolon | rot |
| 14 | 3-Amino-4-(p-methoxy)-phenoxy-benzotrifluorid | " | " | rot |
| 15 | " | " | 5-Amino-benzimidazolon | rot |
| 16 | 2-Amino-5-chlorbenzotrifluorid | " | " | braun |
| 17 | " | " | 5-Amino-6-chlorbenz-imidazolon | rot |
| 18 | " | " | 5-Amino-6-methylbenz-imidazolon | braun |
| 19 | 4-Amino-benzotrifluorid | " | 5-Aminobenzimidazolon | rot |
| 20 | 3-Amino-4-chlorbenzotrifluorid | 6-Methoxy-2,3-hydroxy-naphthoesäure | " | blausti-chig rot |
| 21 | " | 6-Brom-2,3-hydroxy-naphthoesäure | " | rot |
| 22 | 3-Amino-4-phenylsulfonyl-benzotrifluorid | 2,3-Hydroxynaphthoesäure | 5-Amino-6-methylbenz-imidazolon | braun |

Beispiel 23: 0,6 g des nach Beispiel 1 hergestellten Pigments werden mit 67 g Polyvinylchlorid, 33 g Dioctylphthalat, 2 g Dibutylzinndilaurat und 2 g Titandioxyd zusammengemischt und auf einem Walzenstuhl während 15 Minuten bei 160°C zu einer dünnen Folie verarbeitet. Die so erzeugte braune Färbung ist farbstark, migrations- und lichtecht.

Beispiel 24: 1,0 g des nach Beispiel 1 hergestellten Pigments wird mit 4,0 g Druckfirnis der Zusammensetzung

29,4% Leinöl-Standöl (300 Poise),
67,2% Leinöl-Standöl ( 20 Poise),
2,1% Kobaltoctoat ( 8% Co) und
1,3% Bleioctoat ( 24% Pb)

auf einer Engelsmann-Anreibmaschine fein angerieben und hierauf mit Hilfe eines Klischees im Buchdruckverfahren mit 1 $g/m^2$ auf Kunstdruckpapier gedruckt. Man erhält einen starken, reinen Rotbraunton mit guter Transparenz und gutem Glanz.

Das Pigment eignet sich auch für andere Druckverfahren, wie Tiefdruck, Offsetdruck, Flexodruck und ergibt hier ebenfalls sehr gute Resultate.

Beispiel 25: 15 g einer 35% Butanol enthaltenden Kollodiumwolle, 15 g eines mit Ricinusöl modifizierten Phthalatharzes, 15 g einer 70%-igen butanolischen Lösung eines Harnstofflackharzes, 20 g Butylacetat, 10 g Glykolmonoäthyläther, 20 g Toluol und 5 g Alkohol werden zu einem Lack verarbeitet. Dieser wird anschliessend mit 2 g des Farbstoffs gemäss Beispiel 1 und 2 g des Titandioxyds (Rutil) pigmentiert und gemahlen. Nach dem Spritzen auf Karton und Trocknen des Lackes erhält man einen braunen Ueberzug von sehr guter Licht-, Ueberlackier- und Wetterechtheit.

Beispiel 26: Zu 100 g eines Einbrennlackes, der aus 58,5 g einer 60%-igen Lösung eines Kokosalkydharzes (Beckosol 27/320) in Xylol, 23 g einer 65%-igen Lösung eines Melaminlackharzes (Super Beckamin 13/501) in Butanol, 17 g Xylol und 1,5 g Butanol besteht, gibt man 1 g des Farbstoffes gemäss Beispiel 1 und 5 g Titandioxyd. Man mahlt das Gemisch 48 Stunden in einer Kugelmühle und spritzt den so pigmentierten Lack auf eine gereinigte Metalloberfläche. Nach dem Einbrennen bei 120° erhält man eine braune Färbung von guter Licht-, Ueberlackier- und Wetterechtheit.

Patentansprüche

1. Monoazopigmente der Formel

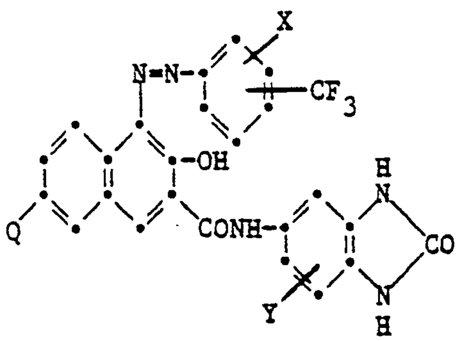

(I)

worin X ein Wasserstoff- oder Chloratom, eine Methoxy-, Aethoxy-, gegebenenfalls durch Chlor-, Methyl- oder Methoxygruppen substituierte Phenoxy-, Trifluormethyl-, Nitro-, Methylsulfonyl-, Aethylsulfonyl- oder Phenylsulfonylgruppe, Y ein Wasserstoff- oder Chloratom, eine Methyl-, Methoxy- oder Aethoxygruppe, Q ein Wasserstoff- oder Bromatom, oder eine Methoxygruppe bedeuten.

2. Monoazopigmente gemäss Anspruch 1 der Formel

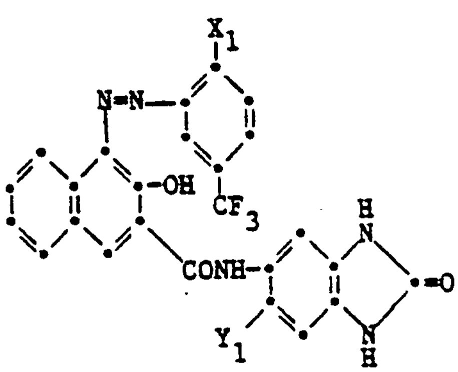

(II)

worin $X_1$ ein Chloratom, eine Methoxy-, Aethoxy-, gegebenenfalls durch Chloratom, eine Methyl- oder Methoxygruppe substituierte Phenoxygruppe, $Y_1$ ein Wasserstoff- oder Chloratom, eine Methyl- oder Methoxygruppe bedeuten.

3. Monoazopigmente gemäss Anspruch 1 der Formel

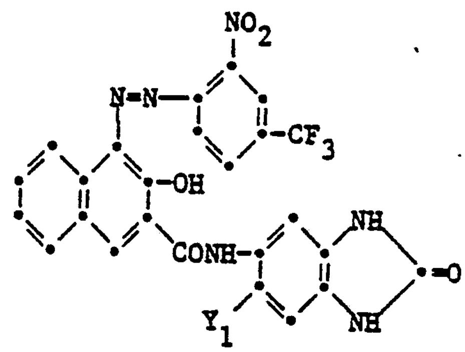

(III)

worin $Y_1$ ein H- oder Chloratom, eine Methyl- oder Methoxygruppe bedeutet.

4. Monoazopigmente gemäss Anspruch 1 der Formel

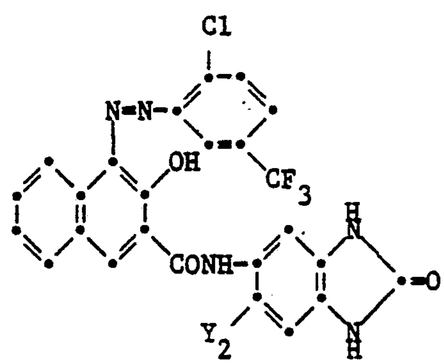

(IV)

worin $Y_2$ ein H-Atom oder eine Methylgruppe oder insbesondere ein Chloratom bedeutet.

5. Monoazopigmente gemäss Anspruch 4, worin $Y_2$ ein Chloratom bedeutet.

6. Verfahren zur Herstellung von Monoazopigmenten gemäss Anspruch 1, dadurch gekennzeichnet, dass man

a) ein Carbonsäurehalogenid der Formel

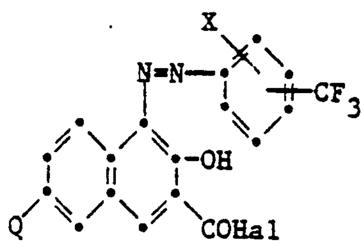

(V)

worin Hal ein Halogenatom bedeutet, mit einem Aminobenzimidazolonderivat der Formel

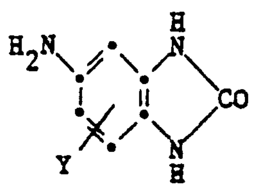

(VI)

im Molverhältnis 1:1 kondensiert, oder

b) die Diazoverbindung eines Amins der Formel

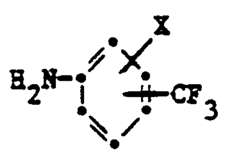

(VII)

mit einer Kupplungskomponente der Formel

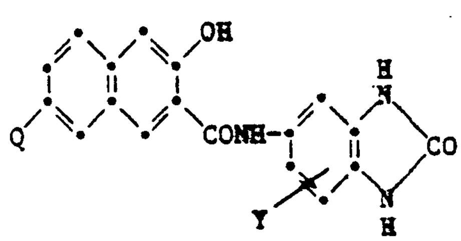

(VIII)

im Molverhältnis 1:1 kuppelt, worin in den Formeln (V)-(VIII) X, Y und Q die im Anspruch 1 angegebene Bedeutung haben.

7. Verfahren gemäss Anspruch 6, dadurch gekennzeichnet, dass man von der Diazoverbindung eines Amins der Formel

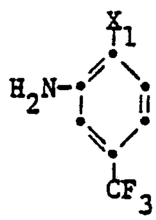

ausgeht, worin $X_1$ ein Chloratom, eine Methoxy-, Aethoxy-, gegebenenfalls durch Chloratom, eine Methyl- oder Methoxygruppe substituierte Phenoxygruppe bedeutet.

8. Verfahren gemäss Anspruch 6, dadurch gekennzeichnet, dass man von der Diazoverbindung eines Amins der Formel

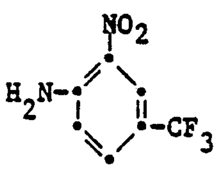

ausgeht.

9. Verfahren zum Pigmentieren von hochmolekularem organischem Material, gekennzeichnet durch die Verwendung der Pigmente gemäss Anspruch 1.

10. Hochmolekulares organisches Material enthaltend ein Pigment gemäss Anspruch 1.